# EUROPÄISCHE PATENTSCHRIFT

(11) **EP 3 017 527 B1**
(45) Veröffentlichungstag und Bekanntmachung des Hinweises auf die Patenterteilung: **08.11.2017**
(21) Anmeldenummer: 14731215.1
(22) Anmeldetag: 12.06.2014
(51) Int. Cl.: H02K 3/52

(54) **ELEKTRONISCH KOMMUTIERTER MOTOR**
ELECTRONICALLY COMMUTED MOTOR
MOTEUR À COMMUTATION ÉLECTRONIQUE

(30) Priorität: 03.07.2013 DE 102013106999
(43) Veröffentlichungstag der Anmeldung: 11.05.2016
(73) Patentinhaber: Ebm-Papst St. Georgen GmbH & CO. KG, 78112 St. Georgen (DE)
(72) Erfinder: GHODSI-KHAMENEH, Hassan, 77654 Offenburg (DE)
(74) Vertreter: Raible Deissler Lehmann Patentanwälte PartG mbB
(86) Internationale Anmeldenummer: PCT/EP2014/062289
(87) Internationale Veröffentlichungsnummer: WO 2015/000672

(56) Entgegenhaltungen:
- EP-A1- 1 947 754
- DE-U1-202005 016 915

## Beschreibung

Die Erfindung betrifft einen elektronisch kommutierten Motor, an welchem mit einem Gewindeteil versehene, elektrische Leiter eines Kontaktarms verschraubbar sind, welche elektrisch leitend mit einer zugeordneten Spannungsquelle verbunden sind.

Derartige elektronisch kommutierte Motoren werden z.B. in Getrieben von Kraftfahrzeugen, insbesondere Doppelkupplungsgetrieben, zur Betätigung von Ölpumpen eingesetzt, sowohl zum Schmieren als auch bei Schaltvorgängen. Hierbei erfolgt eine Kontaktierung des elektronisch kommutierten Motors mit einem zugeordneten Steuergerät und somit einer zugeordneten Spannungsquelle bzw. Endstufe über einen Kontaktarm des Steuergeräts, welcher jeweils in einem vorgegebenen Winkel zum Motor angeordnet ist. Der Kontaktarm ist im Allgemeinen aus Kunststoff ausgebildet und enthält jeweils zur elektrischen Kontaktierung erforderliche, elektrische Leiter. Diese weisen zugeordnete Gewindeteile auf, welche beispielsweise an entsprechenden Wicklungsanschlüssen des elektronisch kommutierten Motors festgeschraubt werden, wobei Zugkräfte an den Wicklungsanschlüssen entstehen können. Nach einer entsprechenden Verschraubung, d.h. im eingebauten Zustand des Motors, können darüber hinaus Zug- und Druckkräfte in axialer Richtung des Kontaktarms an den Wicklungsanschlüssen entstehen, die zu Beschädigungen des Stators bzw. zu einer Unterbrechung der elektrisch leitenden Verbindung zwischen den Wicklungsanschlüssen und den elektrischen Leitern der Kontaktarme führen können.

Die EP 1 947 754 A1 zeigt einen bürstenlosen Gleichstrommotor mit einem Rotor, welcher einen ringförmigen Magneten aufweist, mit einem Stator, welcher einen Statorkern und Wicklungen aufweist. An einem axialen Ende des Statorkerns ist ein Isolierkörper vorgesehen. Am Isolierkörper sind Stromschienen mit Anschlüssen für Wicklungsdrähte vorgesehen. Die Stromschienen sind mit einem Innengewindeteil verbunden und über dieses mit einem Steuerschaltkreis verbunden.

Es ist deshalb eine Aufgabe der Erfindung, einen neuen elektronisch kommutierten Motor mit Wicklungsanschlüssen bereitzustellen, bei welchem eine elektrisch leitende Verbindung zwischen den Wicklungsanschlüssen und mit einem Gewindeteil versehenen elektrischen Leitern eines Kontaktarms herstellbar ist, wobei sowohl bei einer entsprechenden Montage als auch im eingebauten Zustand des Motors an den Wicklungsanschlüssen auftretende Zug- und/oder Druckkräfte zumindest reduziert werden.

Diese Aufgabe wird durch den Gegenstand des unabhängigen Patentanspruchs gelöst. Bevorzugte Ausführungsformen sind Gegenstand der abhängigen Patentansprüche. Die Aufgabe der vorliegenden Erfindung wird durch einen elektronisch kommutierten Motor gemäß Anspruch 1 gelöst. Hierbei erfolgt ein elektrischer Anschluss einer Wicklungsanordnung, welche an einem dem Stator des Motors zugeordneten Isolierkörper angeordnet ist, über mindestens eine Kontaktbahn, welche einen Wicklungsanschluss ausbildet und in axialer Richtung des Motors am Isolierkörper befestigt und lagegesichert ist. Hierdurch kann sowohl bei einer entsprechenden Montage des Motors bzw. einer Verschraubung eines Gewindeteils eines elektrischen Leiters eines externen Kontaktarms an der Kontaktbahn, als auch im eingebauten Zustand des Motors, eine Reduzierung von an dem Wicklungsanschluss auftretenden Zug- und/oder Druckkräften erreicht werden, da diese über die Kontaktbahn in den Isolierkörper und somit ein entsprechendes Blechpaket des Stators eingeleitet werden. Zudem ist mit der Erfindung eine sehr genaue Positionierung des Innengewindeteils möglich, wie es bei der Montage im Automobilbau gefordert wird.
Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigt:
- Fig. 1: eine perspektivische Ansicht eines Außenstators gemäß der Erfindung, mit einem Isolierkörper, an welchem Kontaktbahnen und Wicklungsdrahtkontaktelemente gemäß einer Ausführungsform angeordnet sind,
- Fig. 2: eine Draufsicht auf den Außenstator von Fig. 1,
- Fig. 3: eine Draufsicht auf den Außenstator von Fig. 1 und Fig. 2 bei einer beispielhaften Montage der Kontaktbahnen,
- Fig. 4: eine Schnittansicht des Außenstators von Fig. 1 und Fig. 2, gesehen in Richtung von Pfeilen IV von Fig. 2,
- Fig. 5: eine perspektivische Ansicht des Isolierkörpers von Fig. 1 und Fig. 2,
- Fig. 6: eine Draufsicht auf den Isolierkörper von Fig. 1 und Fig. 2,
- Fig. 7: eine Schnittansicht eines Ausschnitts des Außenstators von Fig. 1 und Fig. 2, gesehen in Richtung von Pfeilen VII von Fig. 2,
- Fig. 8: eine Schnittansicht des Außenstators von Fig. 1 und Fig. 2, gesehen in Richtung von Pfeilen VIII von Fig. 2,
- Fig. 9: eine perspektivische Ansicht der Kontaktbahn von Fig. 1 und Fig. 2, und
- Fig. 10: eine schematische Ansicht eines elektronisch kommutierten Motors gemäß der Erfindung, mit dem Außenstator von Fig. 1 und Fig. 2.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

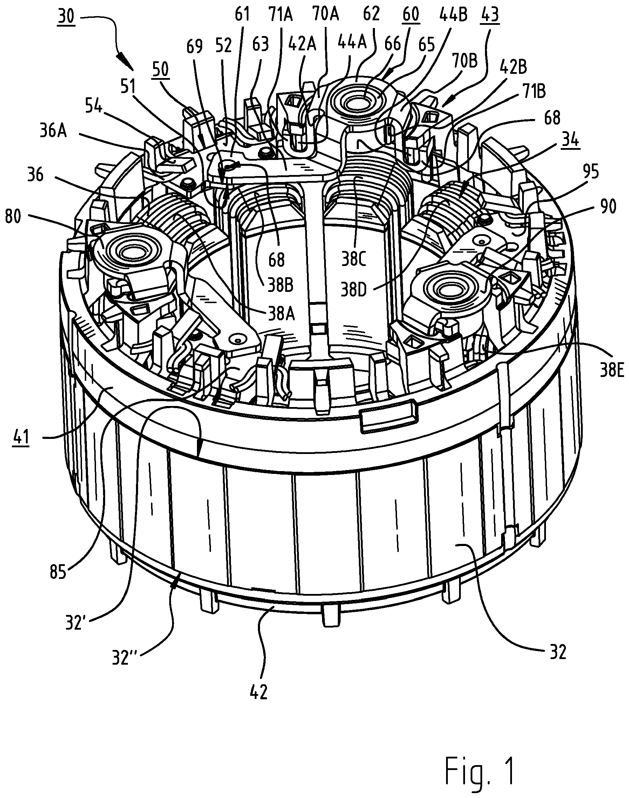

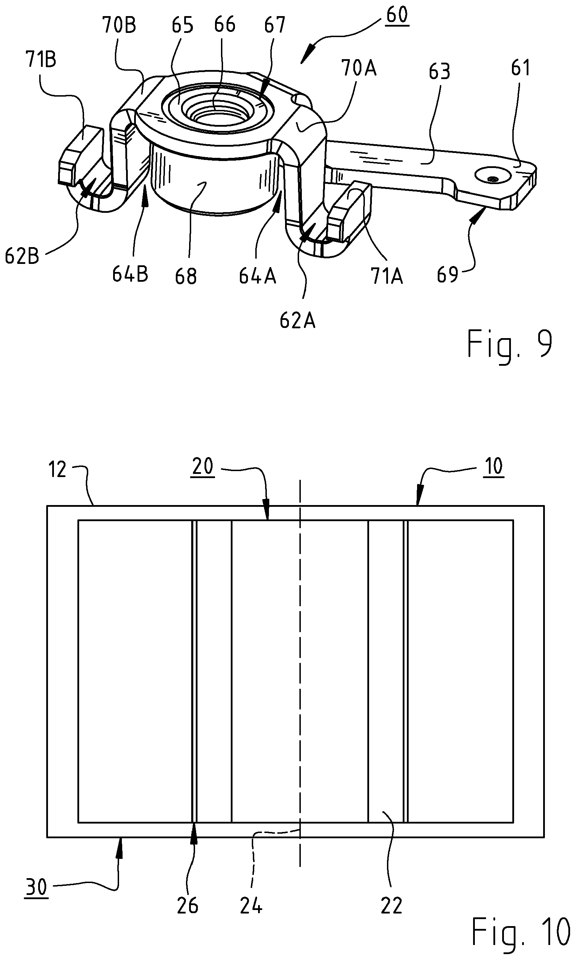

**Fig. 1** zeigt einen zur Verwendung mit einem elektronisch kommutierten Motor (10 in Fig. 10) ausgebildeten Stator 30 gemäß einer Ausführungsform. Dieser ist beispielhaft nach Art eines Außenstators zur Verwendung in einem elektronisch kommutierten Innenläufermotor ausgebildet. Es wird jedoch darauf hingewiesen, dass die vorliegende Erfindung nicht auf Außenstatoren für Innenläufermotoren beschränkt ist, sondern vielmehr auch bei Innenstatoren für Außenläufermotoren Anwendung finden kann.

Der Außenstator 30 ist vorzugsweise ringförmig ausgebildet und hat bevorzugt ein mit einer Wicklungsanordnung 34 versehenes Blechpaket 32, welches aus einer Mehrzahl von lamellenartigen Einzelblechen ausgebildet ist. Alternativ hierzu kann anstelle des lamellierten Blechpakets 32 z.B. ein aus einem Weicheisen hergestellter Statorkern Anwendung finden.

Das Blechpaket 32 ist bevorzugt an einem ersten, oberen axialen Ende 32' mit einem ersten, oberen Isolierkörper 41 versehen und an einem zweiten, unteren axialen Ende 32" mit einem zweiten, unteren Isolierkörper 42. Die Isolierkörper 41, 42 sind vorzugsweise nach Art von Endscheiben derart ausgebildet, dass sie das Blechpaket 32 lediglich an seinen Stirnseiten an den axialen Enden 32' bzw. 32" abdecken. Hierbei können die Isolierkörper 41, 42 am Blechpaket 32 befestigt sein, z.B. durch Verrasten, Verklemmen oder jede beliebige andere Befestigungsart, oder von der Wicklungsanordnung 34 am Blechpaket 32 fixiert und gehalten werden.

Die Wicklungsanordnung 34 hat eine Mehrzahl von Spulen, welche jeweils an ausgeprägten Statorpolen des Blechpakets 32 angeordnet sind, welches in der gezeigten Konfiguration zwölfpolig ausgebildet ist. Zur Vereinfachung und zwecks besserer Übersichtlichkeit sind hier beispielhaft von insgesamt zwölf gezeigten und auf zugeordneten Statorpolen angeordneten Spulen des Außenstators 30 nur fünf Spulen mit den Bezugszeichen 38A, 38B, 38C, 38D, 38E versehen, während auf eine Kennzeichnung der ausgeprägten Statorpole verzichtet wurde. Die Spulen 38A, 38B, 38C, 38D, 38E sind bevorzugt aus mindestens einem Wicklungsdraht 36 um die zugeordneten Statorpole und entsprechende Abschnitte des oberen und unteren Isolierkörpers 41 bzw. 42 gewickelt.

Es wird darauf hingewiesen, dass der Außenstator 30 hier lediglich beispielhaft zwölfpolig ausgebildet ist, und nicht zur Einschränkung der Erfindung. Diese kann vielmehr bei einem Außenstator mit einer beliebigen Anzahl von Statorpolen Anwendung finden, z.B. bei einem Außenstator mit vier, sechs, acht oder mehr Statorpolen.

Gemäß einer Ausführungsform sind am oberen Isolierkörper 41 des Außenstators 30 ein oder mehrere Wicklungsdrahtkontaktelemente angeordnet. Diese dienen zur Zusammenschaltung vorgegebener Spulen der Wicklungsanordnung 34 zur Ausbildung von Statorphasen. Beispielhaft sind am oberen Isolierkörper 41 drei Wicklungsdrahtkontaktelemente 50, 85, 95 angeordnet, welche jeweils vier der zwölf Spulen der Wicklungsanordnung 34 miteinander verschalten, sodass es sich beim Außenstator 30 illustrativ um einen zwölfpoligen und dreiphasigen Stator mit Dreiecksschaltung handelt. Die Wicklungsdrahtkontaktelemente 50, 85, 95 weisen zumindest innerhalb vorgegebener Toleranzen einen übereinstimmenden Aufbau auf, sodass nachfolgend zwecks Knappheit und Einfachheit der Beschreibung lediglich das Wicklungsdrahtkontaktelement 50 stellvertretend für alle Wicklungsdrahtkontaktelemente 50, 85, 95 beschrieben wird.

Das Wicklungsdrahtkontaktelement 50 weist bevorzugt zumindest bereichsweise Kupfer auf und ist am oberen Isolierkörper 41 befestigt, z.B. verrastet, verklemmt, eingepresst, verklebt und/oder verschweißt. Alternativ hierzu kann das Wicklungsdrahtkontaktelement 50 auch lediglich auf den oberen Isolierkörper 41 aufgesetzt sein und unter anderem vom Wicklungsdraht 36 in einer vorgegeben Position fixiert werden. Gemäß einer Ausführungsform ist das Wicklungsdrahtkontaktelement 50 in einem ersten Winkelbereich des Außenstators 30 angeordnet, der illustrativ etwa mittig zwischen den Spulen 38A, 38B angeordnet ist.

Bevorzugt hat das Wicklungsdrahtkontaktelement 50 eine Grundplatte 52 und einen flächigen Wicklungsdrahtkontaktelement-Abschnitt 51. Ausgehend von der Grundplatte 52 erstrecken sich mindestens ein und bevorzugt zwei Brückenelemente mit einer vorgegebenen Biegung von der Grundplatte 52 weg, von denen hier zwecks Einfachheit und Übersichtlichkeit der Zeichnung nur ein Brückenelement mit dem Bezugszeichen 54 versehen ist. Zwischen dem Brückenelement 54 und der Grundplatte 52 ist bevorzugt mindestens ein Abschnitt 36A des mindestens einen Wicklungsdrahts 36 angeordnet, sodass das Wicklungsdrahtkontaktelement 50 mechanisch und elektrisch leitend mit dem mindestens einen Abschnitt 36A und somit mit dem mindestens einen Wicklungsdraht 36 verbunden ist. Hierbei ist der mindestens eine Abschnitt 36A bevorzugt derart am Wicklungsdrahtkontaktelement 50 angeordnet, dass dieses durch den mindestens einen Wicklungsdraht 36 am Isolierkörper 41 fixiert wird, insbesondere für den Fall, dass das Wicklungsdrahtkontaktelement 50 lediglich auf den Isolierkörper 41 aufgesetzt ist.

Gemäß einer Ausführungsform ist das Wicklungsdrahtkontaktelement 50 mit einer zugeordneten Kontaktbahn 60 mechanisch und elektrisch leitend verbunden, welche mindestens einen ersten Bereich 61, einen zweiten Bereich 62 und einen dritten Bereich 63 aufweist. Die Kontaktbahn 60 ist bevorzugt als Biegeteil, insbesondere als Stanzbiegeteil, ausgebildet und weist zumindest bereichsweise Kupfer auf.

Es wird jedoch darauf hingewiesen, dass aufgrund der in diesem Ausführungsbeispiel gegebenen dreiphasigen Ausgestaltung des Außenstators 30 zwei weitere, mit den Bezugszeichen 80, 90 gekennzeichnete Kontaktbahnen Anwendung finden, die mit den Wicklungsdrahtkontaktelementen 85 bzw. 95 mechanisch und elektrisch leitend verbunden sind. Da diese Kontaktbahnen 80, 90 zumindest innerhalb vorgegebener Toleranzen einen mit dem Aufbau der Kontaktbahn 60 übereinstimmenden Aufbau aufweisen, wird jedoch nachfolgend zwecks Knappheit und Einfachheit der Beschreibung lediglich die Kontaktbahn 60 stellvertretend für die drei Kontaktbahnen 60, 80, 90 beschrieben.

Der erste Bereich 61 der Kontaktbahn 60 ist mechanisch und elektrisch leitend mit dem Wicklungsdrahtkontaktelement 50 verbunden. Hierzu hat der erste Bereich 61 bevorzugt mindestens einen flächigen Kontaktbahn-Abschnitt 69, welcher flächig mit dem Wicklungsdrahtkontaktelement-Abschnitt 51 des Wicklungsdrahtkontaktelements 50 verbunden ist, z.B. durch eine Schweiß- oder Klebverbindung. Der erste Bereich 61 ist über den dritten Bereich 63 mit dem zweiten Bereich 62 elektrisch leitend verbunden.

Der zweite Bereich 62 der Kontaktbahn 60 weist bevorzugt mindestens einen ersten Teilbereich 70A, 70B auf, welcher am Isolierkörper 41 an federnden Halteelementen 42A bzw. 42B einer zugeordneten Haltevorrichtung 43 fixiert ist. Dieser erste Teilbereich 70A, 70B begrenzt in Zusammenwirkung mit dem Isolierkörper 41 eine Bewegung des zweiten Bereichs 62 der Kontaktbahn 60 in eine zum Blechpaket 32 weisende Richtung, d.h. nach unten hin, und ist vorzugsweise mit mindestens einem zweiten Teilbereich 71A, 71B verbunden, welcher sich bevorzugt hakenförmig vom ersten Teilbereich 70A, 70B weg erstreckt. Illustrativ sind am zweiten Bereich 62 zwei diametral gegenüberliegende erste Teilbereiche 70A, 70B vorgesehen und jeder dieser ersten Teilbereiche 70A, 70B ist mit einem zugeordneten Teilbereich 71A bzw. 71B verbunden, bevorzugt an diesen angeformt oder einstückig mit diesem ausgebildet. Diese zweiten Teilbereiche 71A, 71B sind bevorzugt an starren Halteelementen 44A bzw. 44B der am Isolierkörper 41 vorgesehenen Haltevorrichtung 43 fixiert und begrenzen in Zusammenwirkung mit dem Isolierkörper 41 eine Bewegung des zweiten Bereichs 62 der Kontaktbahn 60 in eine vom Blechpaket 32 wegweisende Richtung, d.h. nach oben weg.

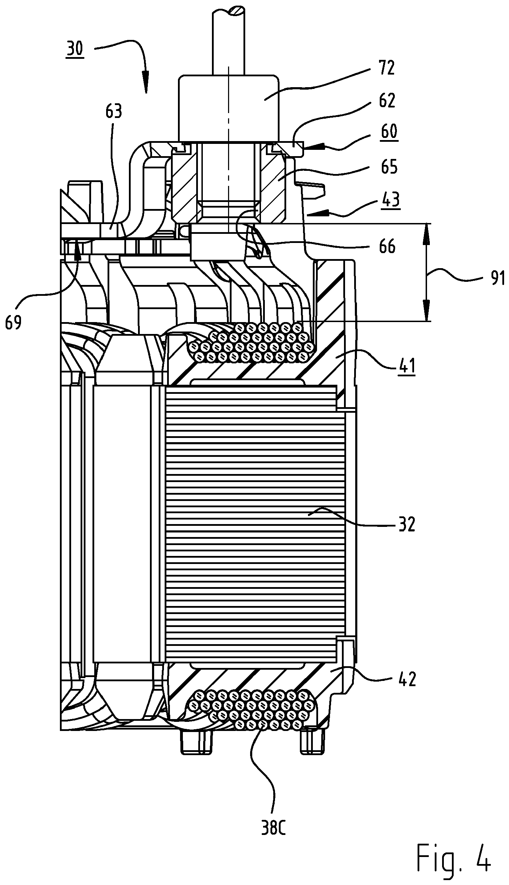

Gemäß einer Ausführungsform ist am zweiten Bereich 62 ein Innengewindeteil 65 mit einem Innengewinde 66 angeordnet. Dieses weist eine vorgegebene Beabstandung von den aus dem mindestens einen Wicklungsdraht 36 gewickelten Spulen 38A, 38B, 38C, 38D auf.
Das Innengewindeteil 65 weist bevorzugt zumindest bereichsweise Stahl auf und ist bevorzugt zweistückig mit dem zweiten Bereich 62 ausgebildet und fest mit diesem verbunden, z.B. durch Verrasten, Einpressen und/oder Verschweißen, um einen elektrischen Anschluss einer zugeordneten, externen Spannungsquelle an die Kontaktbahn 60 zu ermöglichen. Hierzu ist das Innengewinde 66 des Innengewindeteils 65 axial ausgerichtet, um ein Einschrauben eines Schraubenteils, z.B. eines Gewindeteils eines elektrischen Leiters eines Kontaktarms der zugeordneten, externen Spannungsquelle oder eines externen Steuergeräts, aus axialer Richtung zu ermöglichen, vgl. Fig. 4. Das Schraubenteil kann dabei vom Käufer des Motors bereit gestellt werden. Das Innengewindeteil 65 hat eine Außenfläche bzw. einen Außenumfang 68, welche zwischen den federnden Halteelementen 42A, 42B der Haltevorrichtung 43 federnd gehalten wird. Hierbei ist das Innengewindeteil 66 mit dem zweiten Bereich 62 der Kontaktbahn 60 in einem zweiten Winkelbereich des Außenstators 30 angeordnet, welcher illustrativ von der Spule 38C gebildet wird und sich somit nicht mit dem oben beschriebenen, ersten Winkelbereich überlappt.
Bei einer Montage des Außenstators 30 in einem Motorgehäuse eines elektronisch kommutierten Motors (10 in Fig. 10) liegen die Kontaktbahnen 60, 80, 90 bevorzugt mit ihren von der Wicklungsanordnung 34 abgewandten Stirnseiten gegen eine zugeordnete Gehäusewand an. Dies ermöglicht eine zusätzliche axiale Lagesicherung und eine weitere Reduzierung von auf die Kontaktbahnen 60, 80, 90 wirkenden Zug- und/oder Druckkräften.

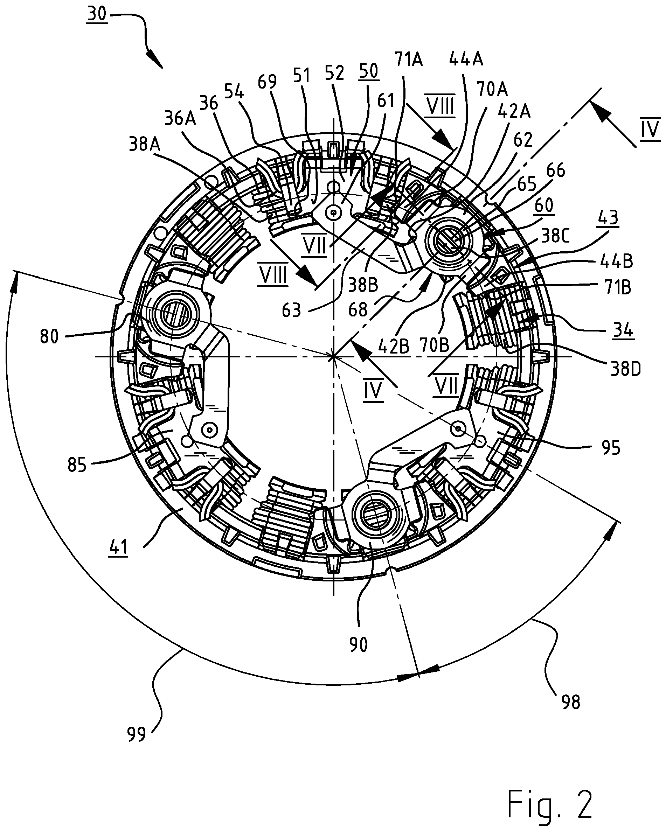

**Fig. 2** zeigt den Außenstator 30 von Fig. 1 mit einer bevorzugten Positionierung der Kontaktbahnen 60, 80, 90 sowie der jeweils zugeordneten Wicklungsdrahtkontaktelemente 50, 85, 95 am Isolierkörper 41. Diese bevorzugte Positionierung verdeutlicht die Anordnung der Kontaktbahnen 60, 80, 90 und der Wicklungsdrahtkontaktelemente 50, 85, 95 in zueinander versetzten, sich nicht überlappenden Winkelbereichen.

Gemäß einer Ausführungsform sind die zweiten Bereiche 62 der Kontaktbahnen 60, 80, 90, mit den Gewindeteilen 65 jeweils in einem mechanischen Winkel von 120° zueinander angeordnet, wie mit einem beispielhaft zwischen den Kontaktbahnen 80, 90 angedeuteten Winkel 99 illustriert. Die mechanische und elektrisch leitende Verbindung der zweiten Bereiche 62 der Kontaktbahnen 60, 80, 90 mit den zugeordneten Wicklungsdrahtkontaktelementen 50, 85, 95 erfolgt wie oben beschrieben über die mit den ersten Bereichen 61 der Kontaktbahnen 60, 80, 90 verbundenen dritten Bereiche 63. Diese dienen zusätzlich als Niederhalter der Wicklungsdrahtkontaktelemente 50, 85, 95 am Isolierkörper 41.

Die Wicklungsdrahtkontaktelemente 50, 85, 95 sind jeweils um einen mechanischen Winkel von etwa 40°, z.B. gegen den Uhrzeigersinn, ausgehend von den zugeordneten Kontaktbahnen 60, 80 bzw. 90, am Isolierkörper 41 angeordnet, wie mit einem beispielhaft zwischen der Kontaktbahn 90 und dem Wicklungsdrahtkontaktelement 95 angedeuteten Winkel 98 illustriert. Somit sind auch die Wicklungsdrahtkontaktelemente 50, 85, 95 jeweils in einem mechanischen Winkel von 120° zueinander angeordnet.

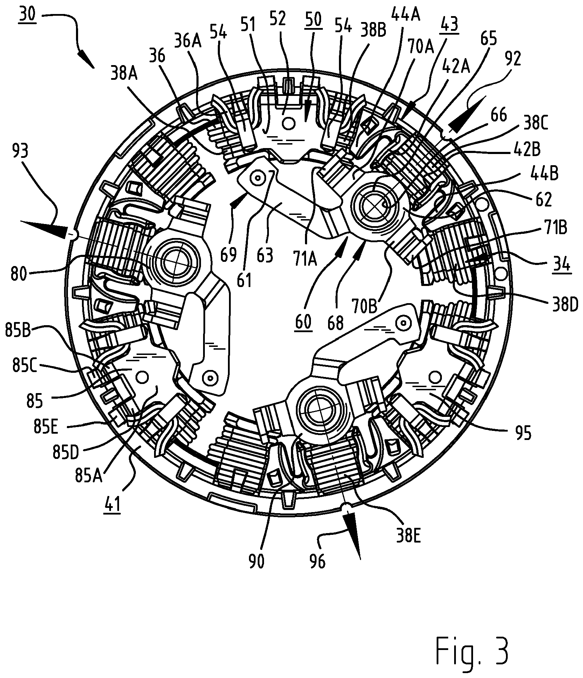

**Fig. 3** zeigt den Außenstator 30 von Fig. 1 und Fig. 2 mit den am Isolierkörper 41 fixierten Wicklungsdrahtkontaktelementen 50, 85, 95 bei einer beispielhaften Montage der Kontaktbahnen 60, 80, 90. Fig. 3 verdeutlicht darüber hinaus den Aufbau des Wicklungsdrahtkontaktelements 50 mit dem flächigen Wicklungsdrahtkontaktelement-Abschnitt 51 und der Grundplatte 52, von der sich die zwei Brückenelemente 54 mit der vorgegebenen Biegung weg erstrecken.

Gemäß einer Ausführungsform hat das Wicklungsdrahtkontaktelement 85 eine Grundplatte 85A und zwei Fixierstege 85B, 85D, welche mit der Grundplatte 85A eine etwa U-förmige Geometrie ausbilden. An den Fixierstegen 85B, 85D ist bevorzugt jeweils ein hakenförmiges Fixierglied 85C bzw. 85E ausgebildet, welches bevorzugt rechtwinklig vom zugeordneten Fixiersteg 85B bzw. 85D abgewinkelt ist. Die Fixierstege 85B, 85D und die Fixierglieder 85C, 85E dienen zur Fixierung des Wicklungsdrahtkontaktelements 85 am Isolierkörper 41. Es wird jedoch darauf hingewiesen, dass die Wicklungsdrahtkontaktelemente 50, 95 wie oben beschrieben einen zumindest innerhalb vorgegebener Toleranzen übereinstimmenden Aufbau haben und somit ebenfalls entsprechende Fixierstege und Fixierglieder aufweisen, auf deren Beschreibung hier jedoch zwecks Knappheit der Beschreibung verzichtet wird.

Bei der Montage der Kontaktbahnen 60, 80, 90 am Isolierkörper 41 werden diese zunächst derart radial innerhalb des Isolierkörpers 41 angeordnet, dass deren zweite Bereiche 62 einem jeweils zugeordneten Winkel- bzw. Montagebereich zugewandt sind und deren erste Bereiche 61 einem jeweils zugeordneten Wicklungsdrahtkontaktelement 50 zugewandt sind. Dann werden die Kontaktbahnen 60, 80, 90 nach radial auswärts auf die Isolierkörper 41 aufgeschoben, wie mit Pfeilen 92, 93, 96 angedeutet, und hierbei an diesen fixiert, wie nachfolgend am Beispiel der Kontaktbahn 60 beschrieben.

Die Kontaktbahn 60 wird zunächst wie gezeigt im Bereich der Spule 38C der Wicklungsanordnung 34 angeordnet, wobei die Teilbereiche 70A, 70B, 71A, 71B von deren zweitem Bereich 62 zumindest annähernd gegenüberliegend zu den Halteelementen 42A, 42B, 44A, 44B der zugeordneten Haltevorrichtung 43 ausgerichtet werden. Dann werden die Teilbereiche 70A, 70B, 71A, 71B auf die Halteelemente 42A, 42B, 44A, 44B aufgeschoben, sodass der zweite Bereich 62 an der Haltevorrichtung 43 verrastet wird und die Kontaktbahn 60 somit am Isolierkörper 41 fixiert ist.

**Fig. 4** zeigt die an der Haltevorrichtung 43 des Isolierkörpers 41 des Außenstators 30 von Fig. 1 und Fig. 2 fixierte Kontaktbahn 60 zur Verdeutlichung einer bevorzugt zwischen dieser und der Spule 38C ausgebildeten Beabstandung 91. Diese dient dazu, einen Kurzschluss zwischen der Spule 38C und dem Innengewindeteil 65 der Kontaktbahn 60 zu verhindern. Ein Schraubenteil 72 mit einem elektrischen Leiter zur elektrischen Kontaktierung ist schematisch angedeutet, und das Schraubenteil 72 ist in das Innengewinde 66 eingeschraubt.

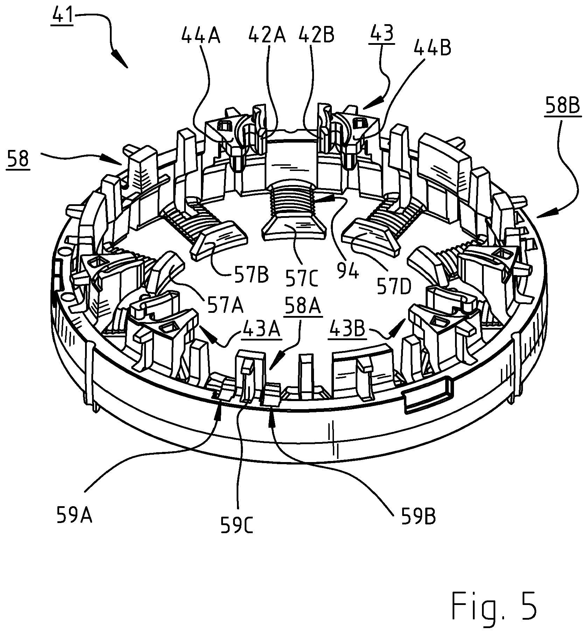

**Fig. 5** zeigt den Isolierkörper 41 von Fig. 1 bis Fig. 4 zur Verdeutlichung der Haltevorrichtung 43 mit den federnden Halteelementen 42A, 42B und den starren Halteelementen 44A, 44B zur Fixierung der Kontaktbahn 60 von Fig. 1 bis Fig. 4. Darüber hinaus weist der Isolierkörper 41 zwei weitere Haltevorrichtungen 43A, 43B zur Fixierung der Kontaktbahnen 80, 90 von Fig. 1 bis Fig. 4 auf sowie bevorzugt mit Wickelrillen versehene, kappenförmige Isolierglieder zur Isolierung der Statorpole des Außenstators 30 von Fig. 1 bis Fig. 4. Beispielhaft sind vier kappenförmige Isolierglieder mit den Bezugszeichen 57A, 57B, 57C, 57D gekennzeichnet. Das Isolierglied 57C hat beispielhaft mit einem Bezugszeichen 94 versehene Wickelrillen, um ein entsprechendes Aufwickeln der Spule 38C von Fig. 1 bis Fig. 4 zu erleichtern.

Zur Fixierung der Wicklungsdrahtkontaktelemente 50, 85, 95 von Fig. 1 bis Fig. 3 sind zugeordnete, bevorzugt zumindest innerhalb vorgegebener Toleranzen übereinstimmende Fixiervorrichtungen 58, 58A, 58B vorgesehen, von denen nachfolgend zwecks Knappheit und Einfachheit der Beschreibung lediglich die Fixiervorrichtung 58A beschrieben wird. Diese hat zwei bevorzugt taschenförmige Aufnahmen 59A, 59B sowie einen Positioniersteg 59C. Die taschenförmigen Aufnahmen 59A, 59B dienen zur Aufnahme der hakenförmigen Fixierglieder 85C bzw. 85E des Wicklungsdrahtkontaktelements 85 von Fig. 3, dessen Fixierstege 85B, 85D den Positioniersteg 59C seitlich umgreifen.

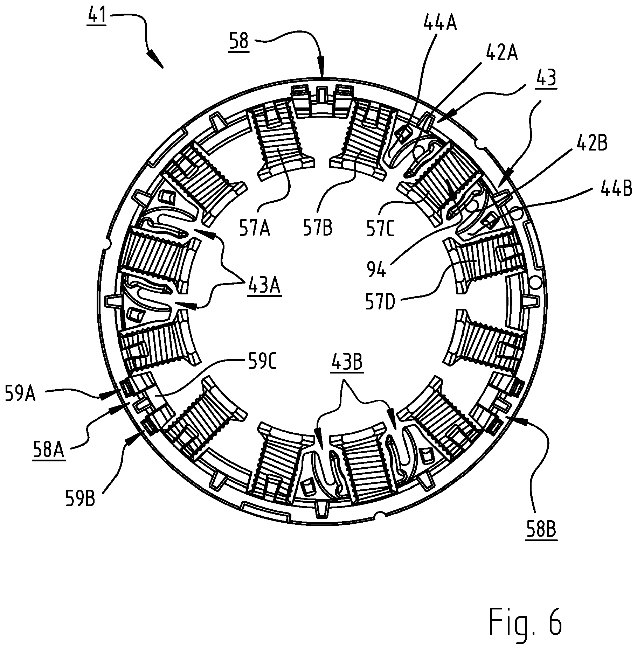

**Fig. 6** zeigt den Isolierkörper 41 von Fig. 5 zur Verdeutlichung der Wickelrillen 94, der taschenförmigen Aufnahmen 59A, 59B und der Haltevorrichtung 43.

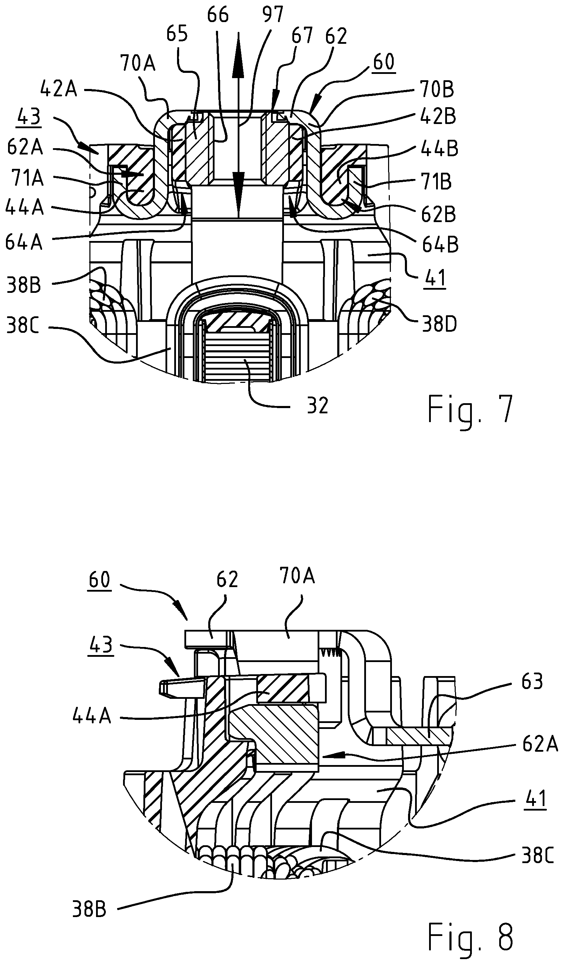

**Fig. 7** zeigt die an der Haltevorrichtung 43 des Isolierkörpers 41 fixierte Kontaktbahn 60 mit dem bevorzugt über einen Presssitz bzw. eine Rastverbindung 67 am zweiten Bereich 62 befestigten Innengewindeteil 65 und den am zweiten Bereich 62 vorgesehenen Teilbereichen 70A, 70B, 71A, 71B von Fig. 1 bis Fig. 4. Die Teilbereiche 70A, 70B bilden bevorzugt mit dem Außenumfang (68 in Fig. 1) des Innengewindeteils 65 erste Aufnahmenuten 64A bzw. 64B zur Aufnahme der federnden Halteelemente 42A bzw. 42B der Haltevorrichtung 43 aus. Die Teilbereiche 71A, 71B bilden bevorzugt mit den Teilbereichen 70A bzw. 70B zweite Aufnahmenuten 62A bzw. 62B zur Aufnahme der starren Halteelemente 44A bzw. 44B der Haltevorrichtung 43 aus.

Gemäß einer Ausführungsform sind die federnden Halteelemente 42A bzw. 42B derart in den ersten Aufnahmenuten 64A bzw. 64B aufgenommen, dass eine Verschiebung der Kontaktbahn 60 in axialer Richtung des Blechpaktes 32 in Richtung der Spule 38C verhindert wird. Darüber hinaus sind die starren Halteelemente 44B bzw. 44B derart in den zweiten Aufnahmenuten 62A bzw. 62B aufgenommen, dass eine Verschiebung der Kontaktbahn 60 in axialer Richtung des Blechpaktes 32 in einer von der Spule 38C wegweisenden Richtung ebenfalls verhindert wird. Somit wird eine mit einem Pfeil 97 gekennzeichnete, axiale Verschiebung der am Isolierkörper 41 fixierten Kontaktbahn 60 relativ zum Blechpaket 32 sicher und zuverlässig verhindert.

**Fig. 8** zeigt die an der Haltevorrichtung 43 des Isolierkörpers 41 fixierte Kontaktbahn 60 mit dem Innengewindeteil 65 von Fig. 7 zur Verdeutlichung des in die Aufnahmenut 62A eingreifenden, starren Halteelements 44A der Haltevorrichtung 43.

**Fig. 9** zeigt die Kontaktbahn 60 von Fig. 1 bis Fig. 4 zur Verdeutlichung der Aufnahmenuten 62A, 62B, 64A, 64B von Fig. 7.

**Fig. 10** zeigt einen gemäß einer Ausführungsform nach Art eines Innenläufermotors ausgebildeten, elektronisch kommutierten Motor 10, bei welchem der Außenstator 30 von Fig. 1 bis Fig. 4 Anwendung findet. Der Motor 10 hat zusätzlich zum Außenstator 30 einen nach Art eines Innenrotors ausgebildeten Rotor 20 mit einer Permanentmagnetanordnung 22, welcher Rotor 20 eine Drehachse 24 des Motors 10 definiert.

Die Figuren und die zugehörige Beschreibung zeigen einen elektronisch kommutierter Motor 10, welcher aufweist:
Einen Rotor 20 mit einer Permanentmagnetanordnung 22, welcher Rotor 20 eine Drehachse 24 des Motors 10 definiert, einen Stator 30 mit einem Blechpaket 32 und einer Wicklungsanordnung 34, welches Blechpaket 32 zumindest an einem axialen Ende 32' mit einem Isolierkörper 41 versehen ist, und welche Wicklungsanordnung 34 eine Mehrzahl von aus mindestens einem Wicklungsdraht 36 gewickelten Spulen 38A, 38B, 38C, 38D umfasst, mindestens ein Wicklungsdrahtkontaktelement 50, welches am Isolierkörper 41 befestigt ist und mit mindestens einem Abschnitt 36A des mindestens einen Wicklungsdrahts 36 mechanisch und elektrisch leitend verbunden ist, mindestens eine Kontaktbahn 60 mit einem ersten Bereich 61, einem zweiten Bereich 62, und einem dritten Bereich 63, wobei der erste Bereich 61 mechanisch und elektrisch leitend mit dem Wicklungsdrahtkontaktelement 50 verbunden ist, wobei am zweiten Bereich 62 ein Innengewindeteil 65 mit einem Innengewinde 66 angeordnet ist, um einen elektrischen Anschluss der Wicklungsanordnung 34 an eine zugeordnete Spannungsquelle zu ermöglichen, und wobei der dritte Bereich 63 den ersten Bereich 61 mit dem zweiten Bereich 62 elektrisch leitend verbindet.

Gemäß einer bevorzugten Ausführungsform ist der Stator 30 ringförmig ausgebildet, das Wicklungsdrahtkontaktelement 50 ist in einem ersten Winkelbereich des Stators 30 angeordnet, und das Innengewindeteil 65 ist in einem zweiten Winkelbereich des Stators 30 angeordnet, wobei sich der erste Winkelbereich und der zweite Winkelbereich nicht überlappen. Dies erleichtert die Montage.
Gemäß einer bevorzugten Ausführungsform weist die Kontaktbahn 60 im zweiten Bereich 62 mindestens einen ersten Teilbereich 70A, 70B auf, welcher am Isolierkörper 41 fixiert ist und in Zusammenwirkung mit dem Isolierkörper 41 eine Bewegung des zweiten Bereichs 62 der Kontaktbahn 60 in eine zum Blechpaket 32 weisende Richtung begrenzt. Dies führt zu einer höheren Genauigkeit und Belastbarkeit bei der Montage.
Gemäß einer bevorzugten Ausführungsform weist die Kontaktbahn 60 im zweiten Bereich 62 mindestens einen zweiten Teilbereich 71A, 71B auf, welcher am Isolierkörper 41 fixiert ist und in Zusammenwirkung mit dem Isolierkörper 41 eine Bewegung des zweiten Bereichs 62 der Kontaktbahn 60 in eine vom Blechpaket 32 wegweisende Richtung begrenzt. Dies führt zu einer höheren Genauigkeit und Belastbarkeit bei der Montage, insbesondere in Zusammenwirkung mit dem Teilbereich 70A, 70B.
Gemäß einer bevorzugten Ausführungsform sind der mindestens eine erste Teilbereich 70A, 70B und der mindestens eine zweite Teilbereich 71A, 71B miteinander verbunden. Dies erhöht die Genauigkeit bei der Montage. Erfindungsgemäß weist das Innengewindeteil 65 eine Außenfläche 68 auf, und der Isolierkörper 41 weist mindestens ein federndes Halteelement 42A, 42B auf, welches dazu ausgebildet ist, das Innengewindeteil 65 an dessen Außenfläche 68 federnd zu halten. Hierdurch wird die Position des federnden Halteelements sehr genau festgelegt, und dies erleichtert das Einschrauben eines Kontakts.
Gemäß einer bevorzugten Ausführungsform weist das Wicklungsdrahtkontaktelement 50 einen flächigen Wicklungsdrahtkontaktelement-Abschnitt 51 auf und der erste Bereich 61 der Kontaktbahn 60 weist einen flächigen Kontaktbahn-Abschnitt 69 auf, wobei der Wicklungsdrahtkontaktelement-Abschnitt 51 und der Kontaktbahn-Abschnitt 69 flächig miteinander verbunden sind, bevorzugt durch eine Schweißverbindung. Dies ergibt eine gute und niederohmige Verbindung und erleichtert eine prozesssichere Kontaktierung.

Gemäß einer bevorzugten Ausführungsform weist die Kontaktbahn 60 Kupfer auf. Kupfer leitet gut und ist duktil. Das hat sich für die Ausbildung der Kontaktbahn 60 als sehr positiv erwiesen.

Gemäß einer bevorzugten Ausführungsform weist das Wicklungsdrahtkontaktelement 50 Kupfer auf. Dies ist insbesondere für eine Ausbildung als Stanz-Biegeteil vorteilhaft.

Gemäß einer bevorzugten Ausführungsform weist das Innengewindeteil 65 Stahl auf. Hierdurch wird eine hohe Stabilität und eine sichere Verbindung mit einem externen Außengewinde ermöglicht.

Gemäß einer bevorzugten Ausführungsform ist die Kontaktbahn 60 als Biegeteil ausgebildet. Dies ermöglicht eine vorteilhafte einteilige Ausbildung der bevorzugt gekrümmten bzw. gebogenen Kontaktbahn 60.

Gemäß einer bevorzugten Ausführungsform sind der zweite Bereich 62 und das Innengewindeteil 65 zweistückig ausgebildet und fest miteinander verbunden. Dies ermöglicht die Verwendung von zwei unterschiedlich hergestellten Teilelementen.

Gemäß einer bevorzugten Ausführungsform ist das Innengewinde 66 des Innengewindeteils 65 axial ausgerichtet, um ein Einschrauben eines Schraubenteils aus axialer Richtung zu ermöglichen. Dies erleichtert die Montage und hat sich als sehr vorteilhaft erwiesen.

Gemäß einer bevorzugten Ausführungsform weist das Wicklungsdrahtkontaktelement 50 eine Grundplatte 52 und ein Brückenelement 54 mit einer Biegung auf, wobei der mindestens eine Abschnitt 36A des mindestens einen Wicklungsdrahts 36 zwischen dem Brückenelement 54 und der Grundplatte 52 angeordnet ist. Hierdurch kann eine sehr sichere und prozesssichere elektrische Verbindung erzielt werden.

Gemäß einer bevorzugten Ausführungsform sind das Innengewindeteil 65 und die aus mindestens einem Wicklungsdraht 36 gewickelten Spulen 38A, 38B, 38C, 38D voneinander beabstandet. Hierdurch kann eine Schraube in das Innengewindeteil 65 ohne die Gefahr einer Zerstörung der Spulen eingeschraubt werden.

Naturgemäß sind im Rahmen der durch den Anspruch 1 definierten Erfindung vielfache Abwandlungen und Modifikationen möglich.

## Patentansprüche

1. Elektronisch kommutierter Motor (10), welcher aufweist:
Einen Rotor (20) mit einer Permanentmagnetanordnung (22), welcher Rotor (20) eine Drehachse (24) des Motors (10) definiert,
einen Stator (30) mit einem Blechpaket (32) und einer Wicklungsanordnung (34), welches Blechpaket (32) zumindest an einem axialen Ende (32') mit einem Isolierkörper (41) versehen ist, und welche Wicklungsanordnung (34) eine Mehrzahl von aus mindestens einem Wicklungsdraht (36) gewickelten Spulen (38A, 38B, 38C, 38D) umfasst,
mindestens ein Wicklungsdrahtkontaktelement (50), welches am Isolierkörper (41) befestigt ist und mit mindestens einem Abschnitt (36A) des mindestens einen Wicklungsdrahts (36) mechanisch und elektrisch leitend verbunden ist, mindestens eine Kontaktbahn (60) mit einem ersten Bereich (61), einem zweiten Bereich (62), und einem dritten Bereich (63),
wobei der erste Bereich (61) mechanisch und elektrisch leitend mit dem Wicklungsdrahtkontaktelement (50) verbunden ist,
wobei am zweiten Bereich (62) ein Innengewindeteil (65) mit einem Innengewinde (66) angeordnet ist, um einen elektrischen Anschluss der Wicklungsanordnung (34) an eine zugeordnete Spannungsquelle zu ermöglichen, wobei das Innengewindeteil (65) eine Außenfläche (68) aufweist, wobei der Isolierkörper (41) mindestens ein federndes Halteelement (42A, 42B) aufweist, welches dazu ausgebildet ist, das Innengewindeteil (65) an dessen Außenfläche (68) federnd zu halten, und
wobei der dritte Bereich (63) den ersten Bereich (61) mit dem zweiten Bereich (62) elektrisch leitend verbindet.

2. Motor nach Anspruch 1, bei welchem der Stator (30) ringförmig ausgebildet ist, das Wicklungsdrahtkontaktelement (50) in einem ersten Winkelbereich des Stators (30) angeordnet ist, und das Innengewindeteil (65) in einem zweiten Winkelbereich des Stators (30) angeordnet ist, wobei sich der erste Winkelbereich und der zweite Winkelbereich nicht überlappen.

3. Motor nach Anspruch 1 oder 2, bei welchem die Kontaktbahn (60) im zweiten Bereich (62) mindestens einen ersten Teilbereich (70A, 70B) aufweist, welcher am Isolierkörper (41) fixiert ist und in Zusammenwirkung mit dem Isolierkörper (41) eine Bewegung des zweiten Bereichs (62) der Kontaktbahn (60) in eine zum Blechpaket (32) weisende Richtung begrenzt.

4. Motor nach Anspruch 3, bei welchem die Kontaktbahn (60) im zweiten Bereich (62) mindestens einen zweiten Teilbereich (71A, 71B) aufweist, welcher am Isolierkörper (41) fixiert ist und in Zusammenwirkung mit dem Isolierkörper (41) eine Bewegung des zweiten Bereichs (62) der Kontaktbahn (60) in eine vom Blechpaket (32) wegweisende Richtung begrenzt.

5. Motor nach Anspruch 4, bei welchem der mindestens eine erste Teilbereich (70A, 70B) und der mindestens eine zweite Teilbereich (71A, 71B) miteinander verbunden sind.

6. Motor nach einem der vorhergehenden Ansprüche, bei welchem das Wicklungsdrahtkontaktelement (50) einen flächigen Wicklungsdrahtkontaktelement-Abschnitt (51) aufweist und bei welchem der erste Bereich (61) der Kontaktbahn (60) einen flächigen Kontaktbahn-Abschnitt (69) aufweist, wobei der Wicklungsdrahtkontaktelement-Abschnitt (51) und der Kontaktbahn-Abschnitt (69) flächig miteinander verbunden sind, bevorzugt durch eine Schweißverbindung.

7. Motor nach einem der vorhergehenden Ansprüche, bei welchem die Kontaktbahn (60) Kupfer aufweist.

8. Motor nach einem der vorhergehenden Ansprüche, bei welchem das Wicklungsdrahtkontaktelement (50) Kupfer aufweist.

9. Motor nach einem der vorhergehenden Ansprüche, bei welchem das Innengewindeteil (65) Stahl aufweist.

10. Motor nach einem der vorhergehenden Ansprüche, bei welchem die Kontaktbahn (60) als Biegeteil ausgebildet ist.

11. Motor nach einem der vorhergehenden Ansprüche, bei welchem der zweite Bereich (62) der Kontaktbahn (60) und das Innengewindeteil (65) zweistückig ausgebildet und fest miteinander verbunden sind.

12. Motor nach einem der vorhergehenden Ansprüche, bei welchem das Innengewinde (66) des Innengewindeteils (65) axial ausgerichtet ist, um ein Einschrauben eines Schraubenteils aus axialer Richtung zu ermöglichen.

13. Motor nach einem der vorhergehenden Ansprüche, bei welchem das Wicklungsdrahtkontaktelement (50) eine Grundplatte (52) und ein Brückenelement (54) mit einer Biegung aufweist, wobei der mindestens eine Abschnitt (36A) des mindestens einen Wicklungsdrahts (36) zwischen dem Brückenelement (54) und der Grundplatte (52) angeordnet ist.

14. Motor nach einem der vorhergehenden Ansprüche, bei welchem das Innengewindeteil (65) und die aus mindestens einem Wicklungsdraht (36) gewickelten Spulen (38A, 38B, 38C, 38D) voneinander beabstandet sind.

## Claims

1. Electronically commutated motor (10), comprising:
a rotor (20) having a permanent-magnet arrangement (22), which rotor (20) defines a rotational axis (24) of the motor (10),
a stator (30) having a laminated core (32) and a winding arrangement (34), which laminated core (32) is provided with an insulator (41) at least on one axial end (32'), and which winding arrangement (34) comprises a plurality of coils (38A, 38B, 38C, 38D) wound from at least one winding wire (36),
at least one winding wire contact element (50), which is fastened to the insulator (41) and is mechanically and electrically conductively connected to at least one portion (36A) of the at least one winding wire (36),
at least one contact path (60) having a first region (61), a second region (62) and a third region (63),
wherein the first region (61) is mechanically and electrically conductively connected to the winding wire contact element (50),
wherein an internal thread part (65) having an internal thread (66) is arranged on the second region (62) in order to make it possible to electrically connect the winding arrangement (34) to an associated voltage source, wherein the internal thread part (65) comprises an external surface (68), wherein the insulator (41) comprises at least one resilient retaining element (42A, 42B) that is designed to resiliently retain the internal thread part (65) on the external surface (68) thereof, and
wherein the third region (63) electrically conductively connects the first region (61) to the second region (62).

2. Motor according to claim 1, wherein the stator (30) is annular, the winding wire contact element (50) is arranged in a first angular region of the stator (30), and the internal thread part (65) is arranged in a second angular region of the stator (30), the first angular region and the second angular region not overlapping.

3. Motor according to either claim 1 or claim 2, wherein the contact path (60) comprises, in the second region (62), at least one first portion (70A, 70B) which is attached to the insulator (41) and, in conjunction with the insulator (41), limits a movement of the second region (62) of the contact path (60) towards the laminated core (32).

4. Motor according to claim 3, wherein the contact path (60) comprises, in the second region (62), at least one second portion (71A, 71B) which is attached to the insulator (41) and, in conjunction with the insulator (41), limits a movement of the second region (62) of the contact path (60) away from the laminated core (32).

5. Motor according to claim 4, wherein the at least one first portion (70A, 70B) and the at least one second portion (71A, 71B) are interconnected.

6. Motor according to any of the preceding claims, wherein the winding wire contact element (50) comprises a planar winding wire contact element portion (51), and wherein the first region (61) of the contact path (60) comprises a planar contact path portion (69), the winding wire contact element portion (51) and the contact path portion (69) being interconnected in planar manner, preferably by a welded joint.

7. Motor according to any of the preceding claims, wherein the contact path (60) comprises copper.

8. Motor according to any of the preceding claims, wherein the winding wire contact element (50) comprises copper.

9. Motor according to any of the preceding claims, wherein the internal thread part (65) comprises steel.

10. Motor according to any of the preceding claims, wherein the contact path (60) is a bent part.

11. Motor according to any of the preceding claims, wherein the second region (62) of the contact path (60) and the internal thread (65) are formed in two pieces and are rigidly interconnected.

12. Motor according to any of the preceding claims, wherein the internal thread (66) of the internal thread part (65) is axially oriented in order to allow a screw part to be screwed in from the axial direction.

13. Motor according to any of the preceding claims, wherein the winding wire contact element (50) comprises a base plate (52) and a bridging element (54) having a bend, the at least one portion (36A) of the at least one winding wire (36) being arranged between the bridging element (54) and the base plate (52).

14. Motor according to any of the preceding claims, wherein the internal thread part (65) and the coils (38A, 38B, 38C 38D) wound from at least one winding wire (36) are mutually spaced.

## Revendications

1. Moteur à commutation électronique (10), lequel présente :
un rotor (20) avec un ensemble d'aimants permanents (22), lequel rotor (20) définit un axe de rotation (24) du moteur (10),
un stator (30) avec un empilage de tôles (32) et un ensemble bobiné (34), lequel empilage de tôles est pourvu d'un corps isolant (41) à au moins une extrémité axiale (32') et lequel ensemble bobiné (34) comprend une pluralité de bobines (38A, 38B, 38C, 38D) constituées d'au moins un fil de bobinage (36),
au moins un élément de contact de fil de bobinage (50), lequel est fixé au corps isolant (41) et relié mécaniquement et de manière électroconductrice à au moins une partie (36A) dudit au moins un fil de bobinage (36),
au moins une piste de contact (60) comprenant une première zone (61), une deuxième zone (62) et une troisième zone (63),
la première zone (61) étant reliée mécaniquement et de manière électroconductrice à l'élément de contact de fil de bobinage (50),
une pièce taraudée (65) munie d'un filetage intérieur (66) qui permet de raccorder électriquement l'ensemble bobiné (34) à une source de tension associée étant disposée dans la deuxième zone (62), la pièce taraudée (65) présentant une surface extérieure (68), le corps isolant (41) présentant au moins un élément de maintien élastique (42A, 42B) qui est conçu pour maintenir élastiquement la pièce taraudée (65) à sa surface extérieure (68), et
la troisième zone (63) reliant de manière électroconductrice la première zone (61) à la deuxième zone (62).

2. Moteur selon la revendication 1, dans lequel le stator (30) est réalisé en forme d'anneau, l'élément de contact de fil de bobinage (50) est disposé dans une première zone angulaire du stator (30) et la pièce taraudée (65) est disposée dans une deuxième zone angulaire du stator (30), la première zone angulaire et la deuxième zone angulaire ne se chevauchant pas.

3. Moteur selon la revendication 1 ou 2, dans lequel la piste de contact (60) présente dans la deuxième zone (62) au moins une première zone partielle (70A, 70B), laquelle est fixée au corps isolant (41) et, en coopération avec le corps isolant (41), limite un déplacement de la deuxième zone (62) de la piste de contact (60) dans une direction orientée vers l'empilage de tôles (32).

4. Moteur selon la revendication 3, dans lequel la piste de contact (60) présente dans la deuxième zone (62) au moins une deuxième zone partielle (71A, 71B), laquelle est fixée au corps isolant (41) et, en coopération avec le corps isolant (41), limite un déplacement de la deuxième zone (62) de la piste de contact (60) dans une direction opposée à l'empilage de tôles (32).

5. Moteur selon la revendication 4, dans lequel ladite au moins une première zone partielle (70A, 70B) et ladite au moins une deuxième zone partielle (71A, 71B) sont reliées entre elles.

6. Moteur selon l'une des revendications précédentes, dans lequel l'élément de contact de fil de bobinage (50) présente une partie d'élément de contact de fil de bobinage (51) plane et dans lequel la première zone (61) de la piste de contact (60) présente une partie de piste de contact (69) plane, la partie d'élément de contact de fil de bobinage (51) et la partie de piste de contact (69) étant reliées entre elles de manière plane, de préférence par une soudure.

7. Moteur selon l'une des revendications précédentes, dans lequel la piste de contact (60) est en cuivre.

8. Moteur selon l'une des revendications précédentes, dans lequel l'élément de contact de fil de bobinage (50) est en cuivre.

9. Moteur selon l'une des revendications précédentes, dans lequel la pièce taraudée (65) est en acier.

10. Moteur selon l'une des revendications précédentes, dans lequel la piste de contact (60) est réalisée sous la forme d'une pièce pliée.

11. Moteur selon l'une des revendications précédentes, dans lequel la deuxième zone (62) de la piste de contact (60) et la pièce taraudée (65) sont réalisées en deux parties et reliées entre elles de manière rigide.

12. Moteur selon l'une des revendications précédentes, dans lequel le filetage intérieur (66) de la pièce taraudée (65) est orienté axialement pour permettre un vissage d'un élément à visser depuis une direction axiale.

13. Moteur selon l'une des revendications précédentes, dans lequel l'élément de contact de fil de bobinage (50) présente une plaque de base (52) et un élément de pont (54) avec une courbure, ladite au moins une partie (36A) dudit au moins un fil de bobinage (36) étant disposée entre l'élément de pont (54) et la plaque de base (52).

14. Moteur selon l'une des revendications précédentes, dans lequel la pièce taraudée (65) et les bobines (38A, 38B, 38C, 38D) constituées d'au moins un fil de bobinage (36) sont espacées les unes des autres.
